(19) Europäisches Patentamt

European Patent Office

Office européen des brevets

(11) **EP 1 178 170 B1**

(12) **FASCICULE DE BREVET EUROPEEN**

(45) Date de publication et mention
de la délivrance du brevet:
**04.02.2004 Bulletin 2004/06**

(51) Int Cl.⁷: **E05B 49/00**, H01Q 1/32,
G06K 19/07

(21) Numéro de dépôt: **01402080.4**

(22) Date de dépôt: **01.08.2001**

(54) **Système de commande à distance pour véhicule automobile avec une antenne de réception améliorée**

Fernsteuerungssystem für Kraftfahrzeuge mit einer verbesserten Empfangsantenne

Remote control system for motor vehicle having an improved receiving antenna

(84) Etats contractants désignés:
**DE FR GB IT SE**

(30) Priorité: **04.08.2000 FR 0010328**

(43) Date de publication de la demande:
**06.02.2002 Bulletin 2002/06**

(73) Titulaire: **Delphi Technologies, Inc.
Troy, MI 48007 (US)**

(72) Inventeur: **Lelandais, Guy
91190 Gif-sur-Yvette (FR)**

(74) Mandataire: **Abello, Michel
Cabinet Peuscet,
78, avenue Raymond Poincaré
75116 Paris (FR)**

(56) Documents cités:
**EP-A- 0 762 535** **EP-A- 0 783 190**
**FR-A- 2 763 186**

**Description**

La présente invention concerne un procédé de commande à distance d'un organe d'un véhicule automobile, notamment un organe de condamnation de l'accès audit véhicule et/ou un organe de démarrage, et aussi un système de commande pour la mise en oeuvre de ce procédé. Un tel système de commande est par exemple utilisé pour permettre l'accès dit mains libres à un véhicule, et/ou le démarrage dit mains libres dudit véhicule ; « mains libres » signifiant qu'il n'est pas nécessaire d'utiliser une clé pour ces opérations.

De manière connue, un tel système de commande comporte généralement un dispositif d'identification portable destiné à être porté par un utilisateur et apte à établir un dialogue bidirectionnel à distance et sans fil avec une unité centrale de commande embarquée sur le véhicule, pour authentifier l'utilisateur et commander des moyens de condamnation/décondamnation des serrures des ouvrants lorsque l'utilisateur a été reconnu authentique. L'initialisation du protocole de communication peut être activée en actionnant la poignée extérieure de porte, pour l'accès mains libres, ou en appuyant sur un bouton de démarrage, dans le mode démarrage mains libres.

Un système couramment proposé consiste à utiliser des ondes porteuses à basse fréquence, de l'ordre de 125 kHz, pour la communication depuis le véhicule vers le dispositif d'identification, et des ondes porteuses à ultra-haute fréquence (UHF), par exemple de l'ordre de 434 ou 868 MHz, pour la zone Europe, et de 315 ou 902 MHz pour la zone USA, pour la communication depuis le dispositif d'identification vers le véhicule. On rappelle que le spectre radiofréquence englobe les fréquences sensiblement inférieures à $10^{11}$ Hz, comprenant aussi bien lesdites basses fréquences que lesdites ultra-hautes fréquences.

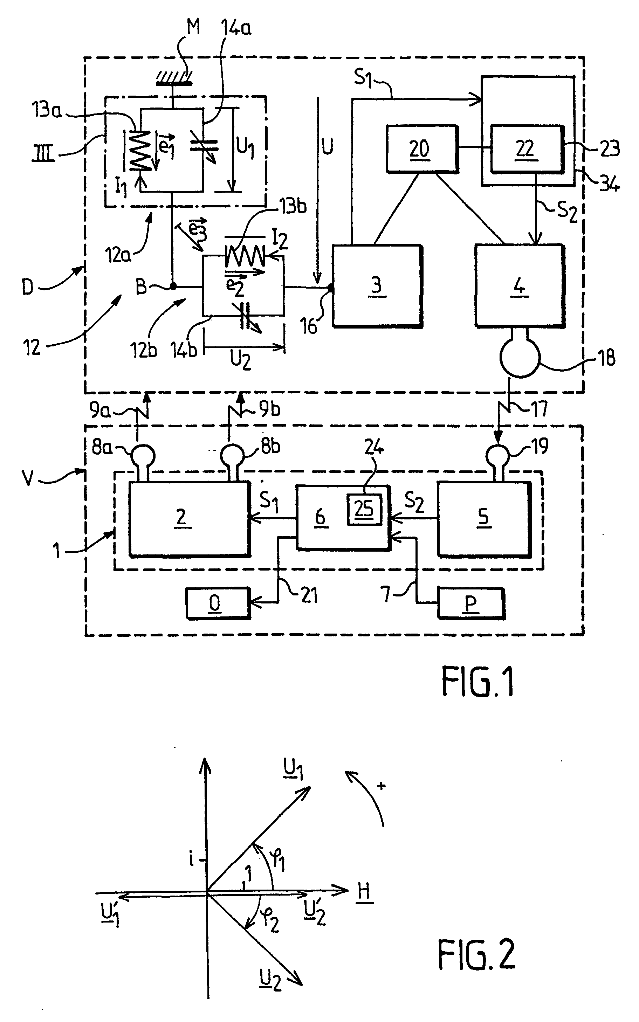

Comme visible à la figure 1, le dialogue bidirectionnel comprend une première communication d'un premier signal $S_1$ émis par modulation d'une onde porteuse engendrée par un générateur à basse fréquence 2 de l'unité centrale 1 du véhicule V, vers un récepteur à basse fréquence 3 dudit dispositif d'identification D et une seconde communication d'un second signal $S_2$ généré par un module de contrôle 34 pour être émis par un second émetteur 4 dudit dispositif d'identification D vers un second récepteur 5 de l'unité centrale 1.

Les première et seconde communications ne peuvent s'opérer que lorsque le dispositif d'identification D est à une distance inférieure ou égale à une distance de communication prédéterminée du véhicule V, généralement de l'ordre de quelques mètres, pour éviter, d'une part, les interférences avec d'autres sources de signaux de l'environnement, et, d'autre part, pour éviter le fonctionnement du système à une distance telle que l'utilisateur est trop éloigné du véhicule pour être conscient des opérations effectuées par ledit système.

A des fins d'authentification de l'utilisateur, ledit premier signal $S_1$ comporte des données caractéristiques dudit véhicule V pour être reconnues par ledit dispositif d'identification D et/ou le second signal $S_2$ comporte des données caractéristiques dudit dispositif d'identification D pour être reconnues par ledit véhicule V. Le dialogue bidirectionnel entre le véhicule et le dispositif d'identification peut être crypté, afin d'éviter tout fonctionnement intempestif du système et pour le sécuriser vis à vis des malfaiteurs.

Pour permettre une utilisation aisée d'un tel système, il est préférable que le dispositif d'identification soit apte à recevoir le premier signal quelle que soit son orientation, afin que l'utilisateur n'ait pas à se soucier de la manière dont il est disposé lorsqu'il le porte sur lui, par exemple dans une de ses poches. Or, une antenne de réception radiofréquence comporte classiquement un axe de réception privilégié, qui est l'axe perpendiculaire aux spires d'un bobinage d'induction cylindrique qu'elle comporte. Pour une telle antenne, l'amplitude du signal reçu est maximale lorsque le vecteur induction magnétique de l'onde porteuse qu'elle reçoit est parallèle à son axe privilégié, et sensiblement nulle lorsque ce vecteur est sensiblement perpendiculaire audit axe. De manière connue, une solution possible pour permettre une réception isotrope du premier signal est de munir ledit premier récepteur, celui du dispositif d'identification, de trois entrées reliées respectivement à trois antennes de réception ayant leurs axes privilégiés respectifs agencés perpendiculairement deux à deux.

L'utilisation d'un tel récepteur à trois entrées a des inconvénients évidents. Elle introduit un surcoût important dans la réalisation du dispositif d'identification, d'une part, parce que le premier récepteur doit dans ce cas comporter des capacités logiques pour sélectionner, à chaque utilisation du système, celle de ses trois antennes qui a la meilleure réception dudit premier signal, d'autre part, parce que des récepteurs à une seule entrée sont disponibles dans le commerce auprès de fournisseurs de composants électroniques à un coût nettement moindre. De plus, lesdites capacités logiques et les entrées supplémentaires nécessitent l'ajout de composants dans le dispositif d'identification, alors même que celui-ci doit être aussi peu encombrant que possible.

Le document EP-A-783 190 décrit un système de communication à distance pour véhicule automobile comprenant une unité d'interrogation portée par le véhicule et un dispositif portable d'identification destiné à être porté par un utilisateur. Le dispositif d'identification comporte au moins deux circuits résonants séparés montés en série et couplés de manière indépendante à au moins deux antennes de réception. Chaque antenne de réception comprend un bobinage d'induction dont les spires sont sensiblement perpendiculaires à un axe dudit bobinage, les axes des bobinages d'induction desdites antennes étant perpendiculaires entre eux.

Le document FR-A-2 763 186 décrit un système conforme au préambule de la revendication 1.

La présente invention a pour but d'éliminer les inconvénients précités et de proposer un système de commande à distance pour véhicule automobile permettant un bon fonctionnement du système indépendamment de l'orientation du dispositif portable d'identification, tout en utilisant dans celui-ci un récepteur à une seule entrée.

Pour cela, l'invention fournit un système de commande à distance conforme à la revendication 1.

De préférence, les axes des bobinages d'induction desdits premier et second éléments récepteurs sont sensiblement perpendiculaires.

Avantageusement, ladite différence de phase est prédéterminée sensiblement égale à $\pi/2$ radians.

De préférence, chacun desdits circuits électriques comprend un condensateur.

Avantageusement dans ce cas, dans chacun desdits circuits électriques, ledit condensateur est monté en parallèle avec ledit bobinage d'induction.

De préférence, lesdits condensateurs sont à capacité variable pour permettre le réglage fin desdites phases après assemblage dudit système.

Selon une autre caractéristique de l'invention, lesdits circuits électriques desdits éléments récepteurs sont prédéterminés de manière à présenter, l'un une première fréquence de résonance sensiblement supérieure à ladite fréquence de porteuse, et l'autre une seconde fréquence de résonance sensiblement inférieure à ladite fréquence de porteuse.

De préférence, les facteurs de surtension des circuits électriques desdits premier et second éléments récepteurs sont sensiblement égaux à 10.

Avantageusement, les amplitudes des impédances desdits premier et second éléments récepteurs sont sensiblement égales.

Selon encore une autre caractéristique de l'invention, ledit émetteur radio-fréquence est apte à émettre lesdites ondes porteuses comportant une première onde de polarisation sensiblement linéaire parallèle à une première direction et une seconde onde de polarisation sensiblement linéaire parallèle à une seconde direction, lesdites première et seconde directions formant un angle non nul, de préférence sensiblement droit ; ledit émetteur radio-fréquence étant aussi apte à émettre ledit premier signal successivement sur ladite première onde, puis sur ladite seconde onde ; afin que ladite tension résultante soit non nulle au moins lors de la réception par ladite antenne de réception de l'une des première et seconde ondes, quelle que soit l'orientation dudit dispositif d'identification par rapport audit véhicule.

De préférence dans ce cas, ledit émetteur radio-fréquence a une première sortie liée à une première bobine d'émission, dont l'axe définit ladite première direction, pour émettre ladite première onde et une seconde sortie liée à une seconde bobine d'émission, dont l'axe définit ladite seconde direction, pour émettre ladite seconde onde.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence au dessin annexé. Sur ce dessin :

- la figure 1 est un schéma synoptique de fonctionnement d'un système de commande à distance selon l'invention ;
- la figure 2 est un diagramme de Fresnel représentant la tension aux bornes d'une antenne de réception du dispositif d'identification du système de la figure 1 ;
- la figure 3 est un schéma du circuit électrique d'un élément récepteur du dispositif d'identification du système de la figure 1 ;
- la figure 4 est un graphique représentant l'amplitude de l'impédance de l'élément récepteur de la figure 3 ;
- la figure 5 est un graphique représentant la phase de l'impédance de l'élément récepteur de la figure 3.

Le système de commande selon l'invention utilise un dialogue bidirectionnel par voie hertzienne entre une unité centrale 1 portée par un véhicule V pour commander un de ses organes O, visible sur la figure 1, et un dispositif portable d'identification D, destiné à être porté par un utilisateur dudit véhicule. Le système de commande selon l'invention comprend l'unité centrale 1 et le dispositif portable d'identification D, qui vont maintenant être décrits en référence à la figure 1.

L'unité centrale 1 comprend un microcontrôleur 6 lié audit organe O, ledit organe O pouvant notamment être un servomécanisme de commande d'un interrupteur de contact ou d'une serrure de portière. Le microcontrôleur 6 est généralement dans un état de semi-sommeil ou d'attente d'un réveil. Lorsque l'utilisateur actionne la poignée extérieure de porte P un signal d'activation 7 est envoyé au microcontrôleur 6. En réponse, le microcontrôleur 6 envoie un signal d'alimentation général, pour alimenter les différents composants électroniques de l'unité centrale 1. A cet effet, l'unité centrale 1 est reliée à une batterie (non représentée) du véhicule V. Puis, le microcontrôleur 6 engendre le signal $S_1$ à communiquer au dispositif d'identification D et l'envoie en entrée d'un générateur à basse fréquence 2 pour moduler les ondes porteuses à basse fréquence qu'il génère. Le générateur à basse fréquence 2 a une fréquence fondamentale de porteuse $f_0$ par exemple de l'ordre de 125 kHz. La sortie du générateur à basse fréquence 2 est reliée à une paire d'antennes d'émission 8a, 8b pour émettre vers le dispositif d'identification D des ondes porteuses 9 portant le signal $S_1$. Par exemple, la paire d'antennes d'émission 8a, 8b est disposée dans la portière (non représentée) du conducteur du véhicule. Chacune des antennes d'émission 8a, 8b comporte un axe défini par une bobine (non représentée) sensiblement cylindrique avec un noyau. Les antennes d'émission 8a et 8b sont disposées sur le véhicule V avec leurs axes respectifs sensiblement perpendiculaires. La première onde porteuse 9a émise par la première antenne d'émission 8a comporte un premier vecteur induction magnétique $H_a$ polarisé linéairement parallèlement à l'axe de la première antenne d'émission 8a, et la seconde onde porteuse 9b émise par la seconde antenne d'émission 8b comporte un second vecteur induction magnétique $H_b$ polarisé linéairement parallèlement à l'axe de la seconde antenne d'émission 8b. Dans la suite, on note les grandeurs vectorielles par des caractères gras, selon la convention anglo-saxonne.

De préférence, d'autres paires d'antennes (non représentées), conçues et agencées identiquement à celle -ci, disposées en différents points du véhicule V, sont reliées au générateur à basse fréquence 2 pour permettre l'émission du signal $S_1$ dans plusieurs directions autour du véhicule V. Par exemple, une deuxième paire est portée par la portière avant du passager (non représentée) et une troisième par le coffre du véhicule (non représenté.)

Le dispositif d'identification D comporte une antenne de réception 12, comprenant deux éléments récepteurs 12a et 12b montés en série. Une première borne d'un premier 12a desdits deux éléments récepteurs est reliée à la masse M, par exemple un boîtier (non représenté) dudit dispositif portable d'identification I, la seconde borne B dudit premier élément récepteur 12a coïncidant avec la première borne du second 12b desdits deux éléments récepteurs, la seconde borne dudit second élément récepteur 12b étant reliée à une entrée 16 du récepteur à basse fréquence 3. Chacun des éléments récepteurs 12a,12b comporte un bobinage d'induction, 13a,13b respectivement, monté en parallèle avec un condensateur de capacité variable, 14a,14b respectivement, entre lesdites deux bornes dudit élément récepteur. Les bobinages d'induction 13a,13b respectifs des deux éléments récepteurs 12a,12b sont munis de noyaux et ont des axes respectifs mutuellement perpendiculaires, définis respectivement par les vecteurs unitaires $e_1$ et $e_2$.

Le récepteur à basse fréquence 3 a une sortie reliée à un module de commande 34 pour provoquer l'émission dudit second signal $S_2$ en réponse audit premier signal $S_1$. Le module de commande 34 engendre le second signal $S_2$ et le transmet au second émetteur 4 à ultra haute fréquence, pour qu'il l'émette sur une onde porteuse de fréquence f' différente de la fréquence fondamentale de porteuse $f_0$, par exemple de l'ordre de 434 MHz. L'onde porteuse 17 est émise via une antenne 18 du second émetteur 4 vers une antenne 19 reliée au second récepteur 5 de l'unité centrale 1. Le dispositif d'identification I comporte aussi une batterie 20 pour alimenter ses différents éléments, le récepteur à basse fréquence 3 et le second émetteur 4 et le module de commande 34, le récepteur à basse fréquence 3 étant de préférence à faible consommation. Pour minimiser la consommation électrique, on peut prévoir, à titre d'exemple, que le dispositif d'identification D soit en sommeil pendant 9 ms et en éveil 1 ms, pendant des périodes de 10 ms lorsqu'il n'est pas en communication avec l'unité centrale 1.

Le récepteur 5 à ultra haute fréquence est apte à démoduler l'onde porteuse 17 reçue par l'antenne 19 pour transmettre à sa sortie le second signal $S_2$ au microcontrôleur 6. Le microcontrôleur 6 est apte à authentifier le signal $S_2$ qu'il reçoit, et à émettre un ordre d'activation 21 vers l'organe O après que l'authenticité du second signal $S_2$ a été reconnue. Par exemple, l'ordre d'activation 21 est pour décondamner une serrure de portière et/ou démarrer le véhicule V .

De préférence, le module de commande 34 est lié à une mémoire permanente 23 où sont mémorisées des données d'identification 22 caractéristiques dudit dispositif d'identification D, pour inclure ces données d'identification 22 dans le second signal $S_2$. Le microcontrôleur 6 de l'unité centrale 1 est aussi lié à une mémoire permanente 24 où sont mémorisées des données d'identification 25 caractéristiques dudit véhicule, afin d'inclure ces données d'identification dans le premier signal $S_1$ et/ou utiliser ces données pour authentifier le second signal $S_2$.

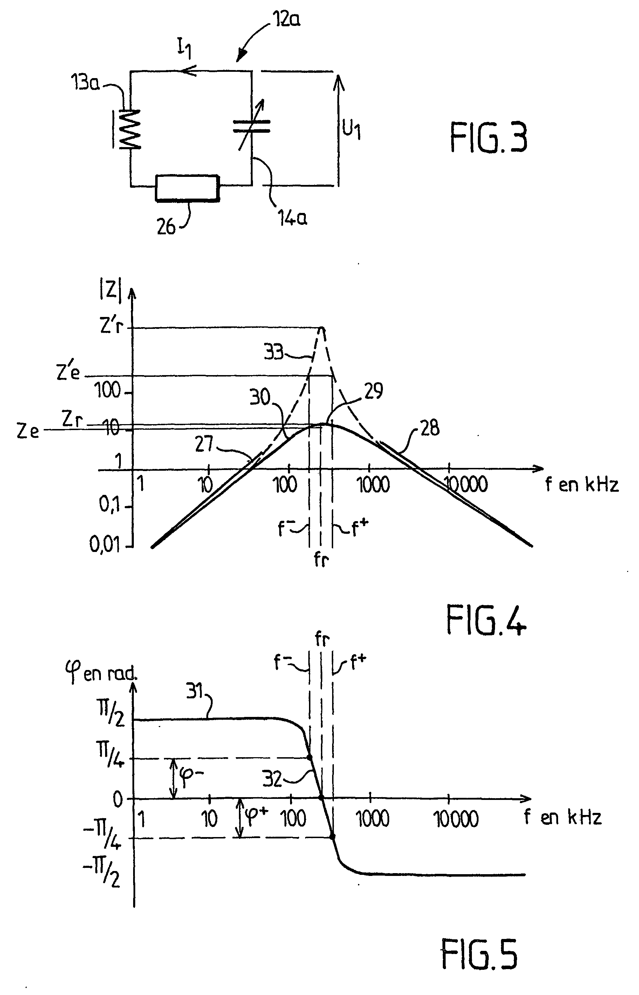

D'autres caractéristiques des éléments récepteurs 12 vont maintenant être décrites en référence aux figures 2 à 5. La figure 3 est un schéma électrique simplifié du premier élément récepteur 12a. Les premier 12a et second 12b éléments récepteurs sont de conceptions identiques et diffèrent par des caractéristiques qui seront expliquées plus bas. Le bobinage d'induction 13a de l'élément récepteur 12a représenté a une résistance électrique R non nulle, qui est explicitement représentée par la résistance 26 à la figure 3. Lors de la réception d'une onde électromagnétique, le bobinage 13a est parcouru par un courant $I_1$, noté positivement dans le sens de la seconde borne B vers la première borne M de l'élément récepteur 12a, qui est proportionnel à la projection du vecteur induction magnétique dans le noyau du bobinage 13a, $H_1$, sur l'axe du bobinage 13a. Le courant $I_1$ est en phase avec le vecteur induction magnétique $H_1$.

Dans la suite, on considère seulement la composante harmonique de fréquence égale à la fréquence fondamentale de porteuse $f_0$ du vecteur induction magnétique $H_1$, les autres composantes étant sensiblement négligeables. On utilise la notation en amplitude complexe pour les grandeurs électromagnétiques harmoniques. Selon cette notation, on rappelle qu'une grandeur réelle A(t), dépendant du temps de manière harmonique à la fréquence f, est représentée par une amplitude complexe $\underline{A}$ définie telle que : $A(t) = Re\{\underline{A} \exp(j2\pi ft)\}$, où j est le nombre complexe $j = \sqrt{-1}$ et $Re\{\}$ désigne la partie réelle.

La relation entre le vecteur induction magnétique $H_1$ et le courant $I_1$ est :

$$\underline{I}_1 = K_1(\underline{H}_1 \cdot e_1), \qquad (E1)$$

où $K_1$ est une constante réelle dépendant des caractéristiques de conception du bobinage d'induction 13a. On définit l'impédance complexe $\underline{Z}_1$ de l'élément récepteur 12a par le rapport entre l'amplitude complexe de la différence de potentiel $U_1$, aussi appelée tension $U_1$, entre sa seconde borne B et sa première borne M et l'amplitude complexe du courant $I_1$, soit

$$\underline{U}_1 = \underline{Z}_1 \underline{I}_1. \qquad (E2)$$

Les équations (E1) et (E2) peuvent être écrites de la même manière pour le seconde élément récepteur 12b, en changeant les indices 1 en 2, le vecteur induction magnétique $H_2$ désignant le vecteur induction magnétique dans le noyau du bobinage 13b, la différence de potentielle $U_2$ étant entre la seconde borne et la première borne de l'élément récepteur 12b, le courant $I_2$ dans le bobinage 13b étant compté positivement dans le sens de la seconde borne 16 vers la première borne B de l'élément récepteur 12b.

Le signal de tension U reçu par le récepteur à basse fréquence 3 à son entrée 16 est la somme de la tension $U_1$ et de la tension $U_2$, soit :

$$\underline{U} = \underline{U}_1 + \underline{U}_2. \qquad (E3)$$

En combinant les équations (E1), (E2) et (E3), on obtient pour l'amplitude complexe du signal de tension U :

$$\underline{U} = \underline{Z}_1 K_1(\underline{H}1 \cdot e_1) + \underline{Z}_2 K_2(\underline{H}_2 \cdot e_2). \qquad (E4)$$

En fait, les deux éléments récepteurs 12a et 12b sont séparés d'une distance complètement négligeable devant la longueur d'onde $_0$ des ondes porteuses 9, $_0 = c/f_0$, qui est de l'ordre de 2400m, c étant la vitesse des ondes électromagnétiques dans l'air. Ains i, les vecteurs induction magnétique $H_1$ et $H_2$ sont égaux, et on notera dans la suite **H** leur valeur commune.

Si, par soucis de simplicité et de réduction des coûts, les deux éléments récepteurs 12a et 12b étaient construits complètement identiques l'un à l'autre, leurs impédances complexes $\underline{Z}_1$ et $\underline{Z}_2$ seraient égales à une valeur commune $\underline{Z}$ et les constantes réelles $K_1$ et $K_2$ à une valeur commune K ; de sorte que l'équation (E4) se simplifierait, en définissant le vecteur **e3** par **e3**=**e1** +**e2**, en :

$$\underline{U} = \underline{Z} K(\underline{H} \cdot e3). \qquad (E5)$$

Sous cette hypothèse, on voit donc que le signal de tension U serait nul dès que le vecteur **H** serait perpendiculaire au vecteur **e3,** visible à la figure 1. Dans ce cas en effet, l'amplitude complexe $\underline{U}'_1$ de la tension aux bornes du premier élément récepteur 12a serait non nulle, exactement opposée à l'amplitude complexe $\underline{U}'_2$ de la tension aux bornes du second élément récepteur 12b. Les amplitudes complexes $\underline{U}'_1$ et $\underline{U}'_2$ à un instant $t_0$ donné sont représentées sur le diagramme de Fresnel de la figure 2. On rappelle que dans un tel diagramme, l'amplitude complexe d'une grandeur scalaire est représentée par un vecteur du plan complexe, avec sa partie réelle en abscisse et sa partie imaginaire en ordonnée. Sans perte de généralité, on a choisi la phase de l'induction magnétique **H** à l'instant $t_0$ comme origine des phases dans le diagramme de la figure 2.

La factorisation de l'équation (E5) se généralise immédiatement au cas d'une antenne comportant N éléments récepteurs identiques montés en série et ayant chacun un bobina ge d'axe défini par un vecteur $e_i$, avec i=1,2,...,N. On obtient toujours un signal de tension nul au bornes d'une telle antenne dès que l'induction magnétique **H** est perpendiculaire au vecteur $\Sigma_{i\{1,N\}} e_i$.

Pour empêcher l'occurrence d'un tel cas, où les tensions aux bornes des deux éléments récepteurs 12a et 12b se compensent exactement, le système selon l'invention prévoit que les impédances complexes $\underline{Z}_1$ et $\underline{Z}_2$ sont choisies avec des valeurs de phase $\phi_1$ et $\phi_2$ différentes. Ainsi, comme représenté à la figure 2, les tensions $U_1$ et $U_2$ ont des vecteurs de Fresnel non colinéaires, qui forment des angles respectifs $\phi_1$ et $\phi_2$ avec l'origine des phases **H**. Dans cette représentation, les vecteurs de Fresnel des tensions $U_1$ et $U_2$ forment un angle algébrique égal à la différence de phase ($\phi_1 - \phi2$) entre les impédances complexes desdits premier 12a et second 12b éléments récepteur, qui est différente de 0 et de $\pi$ ; ce qui implique que les tensions $U_1$ et $U_2$ ne peuvent pas se compenser exactement. Le signal de tension U ne peut être nul que lorsque les tensions $U_1$ et $U_2$ sont respectivement identiquement nulles, c'est-à-dire lorsque le vecteur induction magnétique **H** est perpendiculaire simultanément aux deux vecteurs **e1** et **e2**.

En revenant maintenant aux antennes d'émission 8 visibl es à la figure 1, il a été dit qu'elles émettaient deux ondes porteuses 9a et 9b de polarisations linéaires mutuellement perpendiculaires. Le générateur à basse fréquence 2 envoie le premier signal successivement vers la première antenne d'émission 8a puis vers la deuxième antenne d'émission 8b, pour émettre le premier signal $S_1$ successivement sur les deux ondes porteuses 9a et 9b. Si le premier vecteur induction magnétique $H_a$ n'est pas perpendiculaire aux deux vecteurs **e1** et **e2**, la première onde porteuse 9 a produit un signal de tension U non nul à l'entrée 16 du récepteur 3 et la réception du premier signal $S_1$ par le dispositif d'identification I est bien assurée. Si, au moment de l'émission

dudit premier signal S$_1$, le premier vecteur induction magnétique **H$_a$** se trouve être perpendiculaire aux deux vecteurs **e1** et **e2**, en raison de la manière dont le dispositif d'identification I est disposé pendant l'émission de deux ondes porteuses 9a et 9b, alors le second vecteur induction magnétique **H$_b$** ne peut pas être aussi si perpendiculaire aux deux vecteurs **e1** et **e2**, et la réception du premier signal **S$_1$** par le dispositif d'identification I est aussi assurée grâce à cette deuxième onde porteuse 9b. Ainsi, l'objectif d'une bonne réception dudit premier signal S$_1$ indépendamment de l'orientation du dispositif d'identification **I** a été atteint. A cause de l'émission successive des deux ondes porteuses 9a et 9b, le temps de communication entre l'unité centrale 1 et le dispositif d'identification I est doublé.

En variante, les axes des antennes d'émission 8a et 8b pourraient former un angle non nul sans être perpendiculaires, par exemple un angle de 30°. Le choix d'un angle droit optimise cependant la probabilité d'une bonne réception d'au moins l'une des deux ondes porteuses 9a et 9b par le dispositif d'identification I.

La manière de choisir les phases $\phi_1$ et $\phi_2$ des impédances complexes $\underline{Z}_1$ et $\underline{Z}_2$ va maintenant être décrite en référence aux figures 4 et 5. Aux figures 4 et 5, on a représenté respectivement le module |Z| et la phase $\phi$ de l'impédance complexe, $\underline{Z}=|Z| \exp(j\phi)$, d'un circuit électronique conçu comme les éléments récepteurs 12a, représenté à la figure 3, et 12b. Un tel circuit présente une fréquence de résonance f$_r$, définie par :

$$f_r^2 = 1/(4\pi^2 LC), \qquad (E6)$$

où L est l'inductance du bobinage et C la capacité du condensateur du circuit. La valeur de la fréquence de résonance f$_r$ d'un circuit donné peut donc être adaptée en modifiant les propriétés du condensateur et/ou du bobinage du circuit. L'impédance complexe $\underline{Z}$ à la fréquence de résonance f$_r$ est caractérisée par un maximum du module |Z|, comme visible à la figure 4, et une valeur nulle de la phase $\phi$, comme visible à la figure 5.

Le comportement du module |Z| en fonction de la fréquence f de l'induction magnétique excitatrice est visible à la figure 4, où la courbe 30 représente le module |Z| porté en ordonnée sur une échelle logarithmique, la fréquence f étant portée en abscisse sur une échelle logarithmique. A partir d'une fréquence très inférieure à la fréquence de résonance f$_r$, le module |Z| croît d'abord, linéairement dans la représentation choisie, selon une première asymptote 27, puis présente une forme de cloche 29, dans une bande de résonance centrée sur la fréquence de résonance f$_r$, à laquelle le module |Z| prend sa valeur maximale Z$_r$, avant de décroître, linéairement dans la représentation choisie, selon une seconde asymptote 28. La largeur de ladite bande de résonance et la forme de la cloche 29 sont influencées par un facteur de surtension Q du circuit électro-

nique, défini par Q=2$\pi$Lf$_r$/R. La bande de résonance est d'autant plus étroite et la cloche 29 d'autant plus pointue que le facteur de surtension Q est élevé.

Le comportement de la phase $\phi$ en fonction de la fréquence f de l'induction magnétique excitatrice est visible à la figure 5, où la courbe 31 représente la phase $\phi$ en ordonnée sur une échelle linéaire en radians, la fréquence f étant portée en abscisse sur la même échelle logarithmique qu'a la figure 4. A partir d'une fréquence très inférieure à la fréquence de résonance f$_r$, la phase $\phi$ reste sensiblement égale à $\pi$/2, puis décroît linéairement lorsque la fréquence f est dans ladite bande de résonance jusqu'à une valeur proche de -$\pi$/2, la valeur 0 de phase étant atteinte à ladite fréquence de résonance f$_r$. La phase $\phi$ reste ensuite sensiblement égale à -$\pi$/2 aux fréquences f nettement supérieures à la fréquence de résonance f$_r$. La pente de la décroissance linéaire 32 est d'autant plus raide que ledit facteur de surtension Q est élevé.

Classiquement dans les systèmes radiofréquence, la fréquence de résonance d'une antenne comportant un circuit tel que représenté à la figure 3 est choisie égale à la fréquence fondamentale de l'onde porteuse que ladite antenne doit recevoir et/ou émettre. Ce choix permet d'optimiser le gain de ladite antenne, qui est proportionnel au module |Z|. Selon l'invention, au contraire, la fréquence de résonance du premier élément récepteur 12a est choisie égale à une première fréquence de résonance f$_{r1}$, légèrement supérieure à la fréquence fondamentale f$_0$ des ondes porteuses 9 que les éléments récepteurs 12a et 12b sont destinés à recevoir. Ainsi, vis à vis dudit premier élément récepteur 12a, la fréquence fondamentale f$_0$ est égale à une fréquence de pré-résonance f$^-$, inférieure à la première fréquence de résonance f$_{r1}$, et pour laquelle la phase $\phi_1$ est égale à une phase de pré-résonance $\phi^-$, sensiblement égale, par exemple, à $\pi$/4, comme visible à la figure 5.

Réciproquement, la fréquence de résonance du second élément récepteur 12b est choisie égale à une seconde fréquence de résonance f$_{r2}$, légèrement inférieure à la fréquence fondamentale f$_0$ des ondes porteuses 9. Ainsi, vis à vis dudit second élément récepteur 12b, la fréquence fondamentale f$_0$ est égale à une fréquence de post-résonance f$^+$ supérieure à la seconde fréquence de résonance f$_{r2}$, et pour laquelle la phase $\phi_2$ est égale à une phase de post-résonance $\phi^+$, sensiblement égale, par exemple, à -$\pi$/4, comme visible à la figure 5.

Les fréquences de résonance des deux éléments récepteurs 12a et 12b sont réglées par le choix des bobinages d'induction 13a et 13b et des condensateurs 14a et 14b. Par exemple, la première fréquence de résonance f$_{r1}$ est prise sensiblement égale à 130 kHz et la seconde fréquence de résonance f$_{r2}$ à 120 kHz. En particulier, lorsque les bobinages d'induction 13a et 13b sont à noyau ferromagnétique, un tel réglage est réalisé avantageusement en faisant coulisser le noyau dans le bobinage, en rentrant le noyau pour accroître l'inductance du bobinage ou en le sortant la réduire. Pour faciliter le réglage fin des première et seconde fréquences de réso nance $f_{r1}$ et $fr_2$ par rapport à la fréquence fondamentale de porteuse $f_0$ en fin de fabrication du système, les condensateurs 14a et 14b peuvent aussi être à capacité variable.

Dans l'exemple de réalisation décrit, la moyenne des phases $\phi_1$ et $\phi_2$ des impédances des deux éléments récepteurs 12 est sensiblement égale à la phase desdites impédances à leur fréquence de résonance, qui est nulle. Cependant, si les éléments récepteurs sont conçus différemment, la phase $\phi$ à la fréquence de résonance $f_r$ peut être non nulle, et la moyenne des phases $\phi_1$ et $\phi_2$ peut aussi être non nulle.

A la fréquence fondamentale de porteuse $f_0$, les deux éléments récepteurs 12a et 12b ont les modules en fonctionnement de leurs impédances complexes respectives, $Z_{e1} = |Z_1(f_0)|$ et $Z_{e2} = |Z_2(f_0)|$, sensiblement égaux. Les modules en fonctionnement $Z_{e1}$ et $Z_{e2}$ sont représentés par leur valeur commune $Z_e$ à la figure 4, où les deux modules $|Z_1|$ et $|Z_2|$ sont représentés par la même courbe 30, qui doit être lue avec deux échelles de fréquences différente s pour chacun des deux éléments récepteurs, la fréquence de porteuse $f_0$ étant respectivement égale à ladite fréquence de pré-résonance $f^-$ pour le module $|Z_1|$ et à ladite fréquence de post-résonance $f^+$ pour le module $|Z_2|$. Les valeurs maximales $Z_{r1}$ et $Z_{r2}$ des deux modules $|Z_1|$ et $|Z_2|$, à leurs fréquences de résonance respectives $f_{r1}$ et $f_{r2}$, sont représentées par leur valeur commune $Z_r$ à la figure 4. La valeur en fonctionnement $Z_e$ n'est pas trop inférieure à la valeur maximale $Z_r$ grâce au choix des facteurs de surtension $Q_1$ et $Q_2$ pas trop élevés, par exemple de l'ordre de 10. Ainsi, le gain d'antenne obtenu avec le choix des fréquences de résonance $f_{r1}$ et $f_{r2}$ différentes de la fréquence fondamentale de porteuse $f_0$ présente une faible diminution par rapport à celui qui serait obtenu dans la technique classique précitée, dans laquelle la fréquence de résonance de l'antenne est choisie égale à la fréquence fondamentale de la porteuse devant être reçue.

Au contraire, si le facteur de surtension Q d'un des éléments récepteurs était très élevé, le dérivé de la phase $\phi$ de son impédance par rapport à la fréquence f serait très élevée, donc le choix d'une valeur de phase $\phi$ prédéterminée imposerait de régler très précisément la fréquence de résonance de l'élément récepteur, ce qui résulterait en des critères de précision très sévères sur les spécifications techniques des composants électroniques utilisés. Or une telle précision augmenterait forcément le prix desdits composants.

Par ailleurs dans cette hypothèse de facteur de surtension Q très élevé, le module $|Z|$ de l'impédance, comme représenté par la courbe 33 à la figure 4, décroîtrait très abruptement autour de la fréquence de résonance $f_r$, de sorte que sa valeur en fonctionnement $Z_e'$ à la fréquence fondamentale $f_0$, égale à ladite fréquence de pré-résonance $f^-$ ou de post-résonance $f^+$,

pourrait être très nettement inférieure à sa valeur maximale $Z_r'$ à la résonance, induisant des pertes de gain préjudiciables au fonctionnement du système.

Malgré leurs différences de conception permettant d'obtenir les deux fréquences de résonance $f_{r1}$ et $f_{r2}$ différentes, les bobinages d'induction 13a et 13b ont des constantes réelles $K_1$ et $K_2$ sensiblement égales à une valeur commune K. Finalement, l'amplitude complexe du signal de tension U s'écrit :

$$\underline{U} = \underline{Z}_1 K \underline{H} \cdot \{e_1 + e_2 \exp[-j(\phi_1 - \phi_2)]\}. \qquad (E7)$$

Ainsi, pour la différence de phase $(\phi_1 - \phi_2)$ sensiblement égale à $\pi/2$, l'amplitude complexe $\underline{U}$ est équivalente à la projection d'une onde de polarisation circulaire sur un axe donné. En variante, d'autres valeurs de la différence de phase $(\phi_1 - \phi_2)$, différentes de 0 et de $\pi$, peuvent être choisies, et les constantes réelles $K_1$ et $K_2$ peuvent être différentes, ce qui conduit à une amplitude complexe $\underline{U}$ équivalente à la projection d'une onde de polarisation elliptique sur un axe donné.

Bien que l'invention ait été décrite en liaison avec plusieurs variantes de réalisation particulières, il est bien évident qu'elle n'y est nullement limitée et qu'elle comprend tous les équivalents techniques des moyens décrits ainsi que leurs combinaisons, si celles-ci entrent dans le cadre de l'invention.

Notamment, bien que le mode de réalisation de l'invention représenté comporte deux éléments récepteurs avec des fréquences de résonance respectivement supérieure et inférieure à la fréquence de l'onde porteuse à recevoir, il suffit qu'au moins l'un des éléments récepteurs présente une fréquence de résonance sensiblement différente de la fréquence de l'onde porteuse pour réaliser la différence de phase $(\phi_1 - \phi_2)$ différente de 0 et de $\pi$ entre les tensions respectives obtenues aux bornes des deux éléments récepteurs lors de la réception de l'onde porteuse.

**Revendications**

1. Système de commande à distance pour commander un organe (O) d'un véhicule automobile (V), notamment un moyen de condamnation de l'accès audit véhicule et/ou un moyen de démarrage dudit véhicule, comprenant une unité centrale (1) portée par ledit véhicule (V) et un dispositif portable d'identification (D) destiné à être porté par un utilisateur, ladite unité centrale (1) comportant un microcontrôleur (6) pour générer un premier signal ($S_1$), un émetteur radio-fréquence (2) lié audit microcontrôleur (6) pour émettre ledit premier signal ($S_1$) à destination dudit dispositif d'identification (D) sur des ondes porteuses (9) ayant une fréquence de porteuse ($f_0$) prédéterminée, un récepteur radiofré-

quence (5) lié audit microcontrôleur (6) pour recevoir en réponse un second signal ($S_2$) en provenance dudit dispositif d'identification (D), ledit microcontrôleur (6) étant aussi lié audit organe (O) pour lui délivrer un ordre d'activation (21) après réception dudit second signal ($S_2$); ledit dispositif d'identification (D) comportant un module de réception (3) lié à une antenne de réception (12) pour recevoir ledit premier signal ($S_1$) et un module d'émission (4) pour émettre ledit second signal ($S_2$) à destination de ladite unité centrale (1), ladite antenne de réception (12) comportant un premier (12a) et un second (12b) éléments récepteurs, chacun desdits éléments récepteurs comportant un circuit électrique distinct comprenant, entre une première et une seconde bornes dudit élément récepteur, un bobinage d'induction (13a,13b), dont les spires sont sensiblement perpendiculaires à un axe dudit bobinage, les axes des bobinages d'induction desdits premier et second éléments récepteurs n'étant pas parallèles entre eux, chacun desdits circuits électriques présentant une impédance ($Z_1,Z_2$) liant linéairement la différence de potentiel ($U_1,U_2$) entre sa seconde et sa première borne au courant ($I_1,I_2$) parcourant son dit bobinage d'induction (13a,13b), **caractérisé par le fait que** lesdits éléments récepteurs sont montés en série, ladite seconde borne (B) dudit premier élément récepteur (12a) étant liée à ladite première borne dudit second élément récepteur (12b), ladite seconde borne (16) dudit second élément récepteur étant liée audit module de réception (3), lesdites impédances ($Z_1,Z_2$) des circuits électriques desdits premier et second éléments récepteurs présentant une différence entre leurs phases ($\phi_1,\phi_2$) qui est différente de 0 et de $\pi$ à ladite fréquence de porteuse ($f_0$), afin que la tension résultante (U) entre ladite première borne (M) dudit premier élément récepteur et ladite seconde borne dudit second élément récepteur, ladite tension résultante étant reçue par le module de réception (3), soit non nulle quelle que soit l'orientation dudit dispositif d'identification (D) par rapport audit véhicule (V), sauf éventuellement lorsque le vecteur induction magnétique (**H**) desdites ondes porteuses (9) est simultanément perpendiculaire auxdits axes des bobinages d'induction desdits premier et second éléments récepteurs.

2. Système selon la revendication 1, **caractérisé par le fait que** les axes des bobinages d'induction (13a, 13b) desdits premier (12a) et second (12b) éléments récepteurs sont sensiblement perpendiculaires.

3. Système selon l'une des revendications 1 ou 2, **caractérisé par le fait que** ladite différence de phase ($\phi_1$-$\phi_2$) est prédéterminée sensiblement égale à $\pi/2$ radians.

4. Système selon l'une des revendications 1 à 3, **caractérisé par le fait que** chacun desdits circuits électriques comprend un condensateur (14a, 14b).

5. Système selon la revendication 4, **caractérisé par le fait que** dans chacun desdits circuits électriques, ledit condensateur (14a,14b) est monté en parallèle avec ledit bobinage d'induction (13a,13b).

6. Système selon l'une des revendications 4 ou 5, **caractérisé par le fait que** lesdits condensateurs (14a,14b) sont à capacité variable pour permettre le réglage fin desdites phases ($\phi_1,\phi_2$) après assemblage dudit système.

7. Système selon l'une des revendications 1 à 6, **caractérisé par le fait que** lesdits circuits électriques desdits éléments récepteurs (12a,12b) sont prédéterminés de manière à présenter, l'un une première fréquence de résonance ($f_{r1}$) sensiblement supérieure à ladite fréquence de porteuse ($f_0$), et l'autre une seconde fréquence de résonance ($f_{r2}$) sensiblement inférieure à ladite fréquence de porteuse ($f_0$).

8. Système selon l'une des revendications 1 à 7, **caractérisé par le fait que** les facteurs de surtension ($Q_1,Q_2$) des circuits électriques desdits premier (12a) et second (12b) éléments récepteurs sont sensiblement égaux à 10.

9. Système selon l'une des revendications 1 à 8, **caractérisé par le fait que** les amplitudes ($|Z_1|,|Z_2|$) des impédances desdits premier (12a) et second (12b) éléments récepteurs sont sensiblement égales.

10. Système selon l'une des revendications 1 à 9, **caractérisé par le fait que** ledit émetteur radio -fréquence (2) est apte à émettre lesdites ondes porteuses (9) comportant une première onde (9a) de polarisation sensiblement linéaire parallèle à une première direction et une seconde onde (9b) de polarisation sensiblement linéaire parallèle à une seconde direction, lesdites première et seconde directions formant un angle non nul, de préférence sensiblement droit ; ledit émetteur radio-fréquence (2) étant aussi apte à émettre ledit premier signal ($S_1$) successivement sur ladite première onde (9a), puis sur ladite seconde onde (9b) ; afin que ladite tension résultante (U) soit non nulle au moins lors de la réception par ladite antenne de réception (12) de l'une des première (9a) et seconde (9b) ondes, quelle que soit l'orientation dudit dispositif d'identification (D) par rapport audit véhicule (V).

11. Système selon la revendication 10, **caractérisé par le fait que** ledit émetteur radio-fréquence (2) a une première sortie liée à une première bobine d'émission (8a), dont l'axe définit ladite première direction, pour émettre ladite première onde (9a) et une seconde sortie liée à une seconde bobine d'émission (8b), dont l'axe définit ladite seconde direction, pour émettre ladite seconde onde (9b).

**Claims**

1. Remote control system for controlling a part (O) of a motor vehicle (V), in particular a means for locking access to the said vehicle and/or a means for starting the said vehicle, comprising a central unit (1) carried by the said vehicle (V) and a portable identification device (D) intended to be carried by a user, the said central unit (1) including a microcontroller (6) to generate a first signal ($S_1$), a radio-frequency transmitter (2) connected to the said microcontroller (6) to transmit the said first signal ($S_1$) to the said identification device (D) on carrier waves (9) having a predetermined carrier frequency ($f_0$), a radio-frequency receiver (5) connected to the said microcontroller (6) to receive in response a second signal ($S_2$) from the said identification device (D), the said microcontroller (6) also being connected to the said part (O) to deliver to it an activation instruction (21) after reception of the said second signal ($S_2$); the said identification device (D) including a reception module (3) connected to a reception antenna (12) to receive the said first signal ($S_1$) and a transmission module (4) to transmit the said second signal ($S_2$) to the said central unit (1), the said reception antenna (12) including a first (12a) and a second (12b) reception element, each of the said reception elements including a distinct electrical circuit comprising, between a first and a second terminal of the said reception element, an induction winding (13a, 13b), the turns of which are substantially perpendicular to an axis of the said winding, the axes of the induction windings of the said first and second reception elements not being parallel with each other, each of the said electrical circuits having an impedance ($Z_1$, $Z_2$) linearly connecting the potential difference ($U_1$, $U_2$) between its second and its first terminals to the current ($I_1$, $I_2$) running through its said induction winding (13a, 13b), **characterised by** the fact that the said reception elements are mounted in series, the said second terminal (B) of the said first reception element (12a) being connected to the said first terminal of the said second reception element (12b), the said second terminal (16) of the said second reception element being connected to the said reception module (3), the said impedances ($Z_1$, $Z_2$) of the electrical circuits of the said first and second reception elements having a difference between their phases ($\phi_1$, $\phi_2$) which is different from 0 and from $\pi$ at the said carrier frequency ($f_0$), in order that the resulting voltage (U) between the said first terminal (M) of the said first reception element and the said second terminal of the said second reception element, the said resulting voltage being received by the reception module (3), should be non-zero whatever the orientation of the said identification device (D) relative to the said vehicle (v), except optionally when the magnetic induction vector (H) of the said carrier waves (9) is simultaneously perpendicular to the said axes of the induction windings of the said first and second reception elements.

2. System as described in claim 1, **characterised by** the fact that the axes of the induction windings (13a, 13b) of the said first (12a) and second (12b) reception elements are substantially perpendicular.

3. System as described in one of claims 1 or 2, **characterised by** the fact that the said phase difference ($\phi_1$-$\phi_2$) is predetermined substantially equal to $\pi/2$ radians.

4. System as described in one of claims 1 to 3, **characterised by** the fact that each of the said electrical circuits includes a capacitor (14a, 14b).

5. System as described in claim 4, **characterised by** the fact that in each of the said electrical circuits, the said capacitor (14a, 14b) is mounted in parallel with the said induction winding (13a, 13b).

6. System as described in one of claims 4 or 5, **characterised by** the fact that the said capacitors (14a, 14b) are of variable capacitance to allow fine adjustment of the said phases ($\phi_1$, $\phi_2$) after assembly of the said system.

7. System as described in one of claims 1 to 6, **characterised by** the fact that the said electrical circuits of the said reception elements (12a, 12b) are predetermined so as to have, the one a first resonant frequency ($f_{r1}$) substantially higher than the said carrier frequency ($f_0$), and the other a second resonant frequency ($f_{r2}$) substantially lower than the said carrier frequency ($f_0$).

8. System as described in one of claims 1 to 7, **characterised by** the fact that the over-voltage factors ($Q_1$, $Q_2$) of the electrical circuits of the said first (12a) and second (12b) reception elements are substantially equal to 10.

9. System as described in one of claims 1 to 8, **characterised by** the fact that the amplitudes ($|Z_1|$, $|Z_2|$) of the impedances of the said first (12a) and second (12b) reception elements are substantially equal.

10. System as described in one of claims 1 to 9, **char-**

**acterised by** the fact that the said radio-frequency transmitter (2) is able to transmit the said carrier waves (9) including a first wave (9a) of substantially linear polarisation parallel with a first direction and a second wave (9b) of substantially linear polarisation parallel with a second direction, the said first and second directions forming a non-zero angle, preferably substantially a right-angle; the said radio-frequency transmitter (2) also being suitable to successively transmit the said first signal ($S_1$) on the said first wave (9a) and then on the said second wave (9b); in order that the said resulting voltage (U) is non-zero at least on reception by the said reception antenna (12) of one of the first (9a) and second (9b) waves, whatever the orientation of the said identification device (D) relative to the said vehicle (V).

11. System as described in claim 10, **characterised by** the fact that the said radio-frequency transmitter (2) has a first output connected to a first transmission coil (8a), the axis of which defines the said first direction, to transmit the said first wave (9a), and a second output connected to a second transmission coil (8b), the axis of which defines the said second direction, to transmit the said second wave (9b).

**Patentansprüche**

1. Fernsteuerungssystem zur Steuerung eines Teil (O) eines Kraftfahrzeugs (V), insbesondere ein Mittel zur Verhinderung des Zugangs zum Fahrzeug und/oder ein Mittel zum Starten des Fahrzeugs, mit einer von dem Fahrzeug (V) getragenen Zentraleinheit (1) und einer tragbaren Identifikationseinrichtung (D), die von dem Benutzer zu tragen ist, wobei die Zentraleinheit (1) einen Mikrokontroller (6) zur Erzeugung eines ersten Signals ($S_1$), einen mit dem Mikrokontroller (6) verbundenen Radiofrequenz-Sender (2) zur Ausstrahlung des ersten Signals ($S_1$) an die Identifikationseinrichtung (D) auf Trägerwellen (9) mit einer bestimmten Trägerfrequenz ($f_0$), einen mit dem Mikrokontroller (6) verbundenen Radiofrequenz-Empfänger (5) zum Empfang eines von der Identifikationseinrichtung (D) als Antwort kommenden zweiten Signals ($S_2$) aufweist, wobei der Mikrokontroller (6) außerdem mit dem Teil (O) verbunden ist, um an dieses nach dem Empfang des zweiten Signals ($S_2$) einen Aktivierungsbefehl (21) abzugeben, wobei die Identifikationseinrichtung (D) ein mit einer Empfangsantenne (12) verbundenes Empfangsmodul (3) zum Empfang des ersten Signals ($S_1$) und ein Sendemodul (4) zur Ausstrahlung des zweiten Signals ($S_2$) an die Zentraleinheit (1) aufweist, wobei die Empfangsantenne (12) ein erstes (12a) und ein zweites (12b) Empfangselement aufweist, wobei jedes der Empfangselemente eine bestimmte elektrische Schaltung aufweist, die zwischen einem ersten und einem zweiten Anschluss des Empfangselements eine Induktionsspule (13a, 13b) umfasst, deren Windungen im Wesentlichen senkrecht zur Achse des Spule sind, wobei die Achsen der Induktionsspulen der ersten und zweiten Empfangselemente zueinander nicht parallel sind und jede elektrische Schaltung eine Impedanz ($Z_1$, $Z_2$) aufweist, welche die Potentialdifferenz ($U_1$, $U_2$) zwischen ihrem zweiten und ihrem ersten Anschluss linear mit dem ihre Induktionsspule (13a, 13b) durchströmenden Strom ($I_1$, $I_2$) verknüpft, **dadurch gekennzeichnet, dass** die Empfangselemente in Reihe geschaltet sind wobei der zweite Anschluss (B) des ersten Empfangselements (12a) mit dem ersten Anschluss des zweiten Empfangselements (12b) verbunden ist und der zweite Anschluss (16) des zweiten Empfangselements mit dem Empfangsmodul (3) verbunden ist, wobei die Impedanzen ($Z_1$, $Z_2$) der elektrischen Schaltung des ersten und zweiten Empfangselements eine Differenz zwischen ihren Phasen ($\phi_1$, $\phi_2$) aufweisen, die bei der Trägerfrequenz ($f_0$) von 0 und von $\pi$ verschieden ist, so dass die resultierende Spannung (U) zwischen dem ersten Anschluss (M) des ersten Empfangselements und dem zweiten Anschluss des zweiten Empfangselements, wobei die resultierende Spannung von dem Empfangsmodul (3) aufgenommen wird, unabhängig von der Orientierung der Identifikationseinrichtung (D) bezüglich des Fahrzeugs (V) von Null verschieden ist, außer gegebenenfalls wenn der Vektor der magnetischen Induktion (H) der Trägerwellen (9) gleichzeitig senkrecht zu den Achsen der Induktionsspulen der ersten und zweiten Empfangselemente ist.

2. System gemäß Anspruch 1, **dadurch gekennzeichnet, dass** die Achsen der Induktionsspulen (13a, 13b) der ersten (12a) und zweiten (12b) Empfangselemente im Wesentlichen senkrecht zueinander stehen.

3. System gemäß einem der Ansprüche 1 oder 2, **dadurch gekennzeichnet, dass** die Phasendifferenz ($\phi_1-\phi_2$) im Wesentlichen auf $\pi/2$ (Bogenmaß) festgelegt ist.

4. System gemäß einem der Ansprüche 1 bis 3, **dadurch gekennzeichnet, dass** jede der elektrischen Schaltungen einen Kondensator (14a, 14b) umfasst.

5. System gemäß Anspruch 4, **dadurch gekennzeichnet, dass** in jeder der elektrischen Schaltungen der Kondensator (14a, 14b) parallel zu der Induktionsspule (13a, 13b) geschaltet ist.

**6.** System gemäß einem der Ansprüche 4 oder 5, **dadurch gekennzeichnet, dass** die Kondensatoren (14a, 14b) eine variable Kapazität aufweisen, um nach dem Zusammenbau des Systems eine Feineinstellung der Phasen ($\phi_1$, $\phi_2$) zu ermöglichen

**7.** System gemäß einem der Ansprüche 1 bis 6, **dadurch gekennzeichnet, dass** die elektrischen Schaltungen der Empfangselemente (12a, 12b) so beschaffen sind, dass sie eine erste Resonanzfrequenz ($f_{r1}$) besitzen, die merklich höher als die Trägerfrequenz ($f_0$) ist und eine zweite Resonanzfrequenz ($f_{r2}$), die merklich tiefer als die Trägerfrequenz ($f_0$) ist.

**8.** System gemäß einem der Ansprüche 1 bis 7, **dadurch gekennzeichnet, dass** die Gütefaktoren ($Q_1$, $Q_2$) der elektrischen Schaltungen der ersten (12a) und zweiten (12b) Empfangselemente im Wesentlichen gleich 10 sind.

**9.** System gemäß einem der Ansprüche 1 bis 8, **dadurch gekennzeichnet, dass** die Amplituden ($|Z_1|$, $|Z_2|$) der Impedanzen der ersten (12a) und zweiten (12b) Empfangselemente im Wesentlichen gleich sind.

**10.** System gemäß einem der Ansprüche 1 bis 9, **dadurch gekennzeichnet, dass** der Radiofrequenz-Sender (2) solche Trägerwellen (9) aussenden kann, die eine erste Welle (9a) mit einer im Wesentlichen linearen Polarisation, die parallel zu einer ersten Richtung ist, und eine zweite Welle (9b) mit einer im Wesentlichen linearen Polarisation, die parallel zu einer zweiten Richtung ist, aufweisen, wobei die ersten und zweiten Richtungen einen von Null verschiedenen Winkel bilden, vorzugsweise einen im Wesentlichen rechten Winkel, wobei der Radiofrequenz-Sender (2) das erste Signal ($S_1$) nacheinander auf der ersten Welle (9a), dann auf der zweiten Welle (9b) aussenden kann, so dass die resultierende Spannung (U) unabhängig von der Orientierung der Identifikationseinrichtung (D) bezüglich des Fahrzeugs (V) wenigstens während des Empfangs von einer der ersten (9a) oder zweiten (9b) Wellen durch die Empfangsantenne (12) von Null verschieden ist.

**11.** System gemäß Anspruch 10, **dadurch gekennzeichnet, dass** der Radiofrequenz-Sender (2) einen mit einer ersten Emissionsspule (8a), deren Achse die erste Richtung definiert, verbundenen ersten Ausgang zur Ausstrahlung der ersten Welle (9a) und einen mit einer zweiten Emissionsspule (8b), deren Achse die zweite Richtung definiert, verbundenen zweiten Ausgang zur Ausstrahlung der zweiten Welle (9b) aufweist.

FIG.1

FIG.2

FIG.3

FIG.4

FIG.5